Europäisches Patentamt

(19) European Patent Office    (11) Numéro de publication: **0 149 384**

Office européen des brevets    **B1**

(12) **FASCICULE DE BREVET EUROPÉEN**

(45) Date de publication du fascicule du brevet:
20.07.88

(21) Numéro de dépôt: **84402561.9**

(22) Date de dépôt: **12.12.84**

(51) Int. Cl.⁴: **B 21 D 51/24,** B 23 P 11/00, F 16 F 9/32

(54) **Tube à fond soudé, notamment pour la réalisation d'un ressort à gaz sous forte pression.**

(30) Priorité: **16.12.83 FR 8320187**

(43) Date de publication de la demande:
**24.07.85 Bulletin 85/30**

(45) Mention de la délivrance du brevet:
**20.07.88 Bulletin 88/29**

(84) Etats contractants désignés:
**AT BE CH DE FR GB IT LI LU NL SE**

(56) Documents cité:
**EP-A-0 042 925**
**DE-C-313 330**
**FR-A-2 395 807**
**GB-A-376 957**
**US-A-3 594 894**

**PATENTS ABSTRACTS OF JAPAN, vol. 7, no. 5 (M-184) 1150 , 11 janvier 1983; & JP - A - 57 165 124 (KAYABA KOGYO K.K.) 12-10-1982**

(73) Titulaire: **AIRAX, Z.I. Besançon- Chemaudin, F-25320 Montferrand- Le- Chateau (FR)**

(72) Inventeur: **Jaillet, André, Rue des Vignes, Auxon Dessus F-25870 Geneuille (FR)**

(74) Mandataire: **de Boisse, Louis, CABINET DE BOISSE 37, Avenue Franklin D. Roosevelt, F-75008 Paris (FR)**

## Description

La présente invention concerne un procédé de fabrication d'un tube à fond soudé, notamment pour la réalisation d'un ressort à gaz sous forte pression.

On connaît des ressorts à gaz, qui sont utilisés par exemple pour équilibrer les hayons arrière de voitures automobiles. Le bon fonctionnement de ces ressorts nécessite qu'ils soient remplis avec un gaz sous une pression interne très élevée, pouvant aller jusqu'à 150 bars, et parfois même davantage. Pour éliminer tout risque de fuite ou d'explosion du tube à fond soudé qui est le constituant essentiel d'un tel ressort à gaz, il faut évidemment que la soudure qui réunit le fond au tube soit d'une qualité exceptionnelle.

Jusqu'à présent, le fond, constitué par une pastille métallique de dimensions transversales supérieures aux dimensions transversales internes du tube, était appliqué, de l'extérieur, sur l'extrémité ouverte du tube, à laquelle ladite pastille était ensuite soudée, également de l'extérieur du tube. Bien entendu, les forces de pression considérables qui s'exercent sur le fond soudé d'un tel tube, utilisé pour réaliser un ressort à gaz, tendent à séparer le fond du tube, et sont encaissées exclusivement par la soudure. On a constaté que ce procédé de fabrication ne permettait pas d'éliminer totalement les risques d'explosion pour les raisons suivantes: d'une part, la pastille métallique destinée à fermer le tube provient parfois d'une pièce d'acier de qualité inférieure, qui aurait dû être mise au rebut, mais qui s'est trouvée mélangée, par erreur, avec des pièces de qualité supérieure; d'autre part, le fonctionnement de la machine de soudage est sujet à des fluctuations, dues notamment à des micro-coupures, des chutes brèves de tension... etc, qui nuisent à la qualité définitive de la soudure.

On connait par ailleurs, voir GB-A-376 957, un procédé de fabrication de corps creux métalliques qui peut éviter les risques d'accident dus à une rupture de la soudure grâce au fait que celle-ci travaille en compression et non en traction comme dans la technique décrite plus haut.

Selon ce procédé, on rabat vers l'intérieur l'une des extrémités ouvertes d'un tube pour former un rebord déterminant une ouverture de diamètre intérieur plus petit, on place à l'intérieur dudit tube un embout de diamètre externe plus grand que le diamètre intérieur de l'ouverture, mais inférieur au diamètre intérieur du tube, on déplace ledit embout jusqu'à ce qu'il vienne buter contre le rebord, on maintient ledit embout appliqué contre ledit rebord et on l'y soude pour constituer un fond de tube étanche.

Plusieurs formes sont envisagées dans ce document en ce qui concerne l'embout, qui peut être plan, avec une concavité tournée vers l'intérieur, ou une saillie dirigée vers l'extérieur, mais, dans tous les cas, la soudure a, en section transversale, une forme triangulaire avec une base convexe faisant saillie sur la surface extérieure du récipient terminé. Cette forme, qu'on trouve aussi dans l'art antérieur exposé plus haut, présente l'inconvénient que la soudure est mal protégée contre les agents de corrosion atmosphérique si le récipient est exposé à l'extérieur, ce qui est fréquemment le cas pour les ressorts à gaz. Ce problème n'est pas évoqué dans le document précité, et même lorsque l'embout comporte une saillie dirigée vers l'extérieur, celle-ci ne diminue en rien l'accessibilité de la soudure aux agents atmosphériques.

L'invention a pour but de fournir un procédé d'obtention d'un tube à fond soudé dans lequel la soudure est placée de façon à travailler à la compression, et dans lequel, en outre, la soudure présente une accessibilité réduite pour les agents de corrosion atmosphérique, si bien que ce tube a une résistance et une durée de vie améliorées.

L'invention fournit en conséquence un procédé de confection d'un tube à fond soudé, selon lequel on rabat vers l'intérieur l'une des extrémités ouvertes d'un tube pour former un rebord déterminant une ouverture de diamètre intérieur plus petit, on place à l'intérieur dudit tube un embout de diamètre externe plus grand que le diamètre intérieur de l'ouverture, mais inférieur au diamètre intérieur du tube, cet embout présentant en son milieu, du côté tourné vers l'ouverture, une saillie, on déplace ledit embout jusqu'à ce qu'il vienne buter contre le rebord, on maintient ledit embout appliqué contre ledit rebord et on l'y soude pour constituer un fond de tube étanche, caractérisé en ce que ladite saillie de l'embout est cylindrique, avec un diamètre à peine inférieur à celui de l'ouverture et une hauteur choisie de manière que le fond du tube présente, après soudage, une face externe presque plane.

A titre d'exemple, on a décrit ci-dessous et illustré schématiquement au dessin annexé, une forme de réalisation de l'invention.

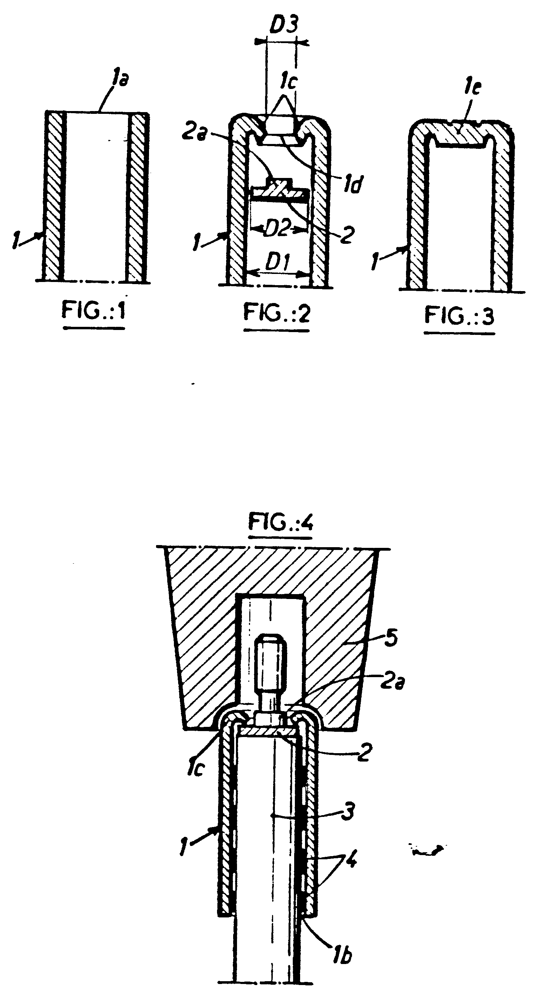

Les figures 1 à 3 illustrent schématiquement le procédé de fabrication d'un tube à fond soudé selon la présente invention; la figure 4 illustre la mise en oeuvre du procédé des figurres 1 à 3 au moyen de deux électrodes de soudage, de formes appropriées.

Sur les figurres du dessin annexé, 1 désigne un tube en acier soudable de diamètre interne D1 et de dimensions appropriées pour constituer un ressort à gaz sous forte pression.

Sur la figure 1, on a seulement représenté la partie de ce tube qui est voisine de celle de ses extrémités 1a, qui doit être obturée pour constituer le fond. Selon la présente invention, le bord de cette extrémité 1a est replié vers l'intérieur du tube, comme indiqué en 1c sur la figure 2, par exemple par sertissage, par roulage, en utilisant une bouterolle, ou par un procédé analogue. On réalise ensuite un embout 2 en acier soudable, dont les dimensions transversales, notamment le diamètre D2, est compris entre le diamètre D3 de l'ouverture 1d à

2

(figure 2) délimitée par le bord replié 1c du tube, et le diamètre interne D1 dudit tube. On engage l'embout 2 à l'intérieur du tube 1 par sa seconde extrémité ouverte de façon à amener l'embout 2 au contact du bord replié 1c, auquel l'embout 2 est ensuite soudé par un procédé approprié quelconque. Dans l'exemple de réalisation illustré sur les figures 2 et 3, la pastille métallique qui constitue l'embout 2 présente en son milieu une saillie cylindrique 2a (figure 2) dont le diamètre est à peine inférieur à celui de l'ouverture 1d, et dont la hauteur est choisie de manière que le fond 1e du tube 1 (figure 3) présente, après soudage, une face externe presque lisse, tout comme sa face interne. Ceci améliore non seulement l'aspect esthétique du tube à fond soudé, mais aussi protège efficacement sa soudure contre la corrosion.

L'embout 2 destiné à constituer le fond du tube est de préférence soudé électriquement par le procédé selon la présente invention, qui va être décrit à l'aide de la figure 4:

L'embout 2 est posé sur la face supérieure d'une électrode inférieure de soudage, 3, qui est de préférence de forme cylindrique, et de diamètre un peu inférieur au diamètre interne du tube 1, et par exemple de diamètre voisin de celui de l'embout 2. Le tube 1, dont le bord de l'extrémité ouverte 1a a été replié en 1c, comme on l'a décrit précédemment à l'aide de la figure 2, est ensuite enfilé, par sa seconde extrémité, 1b, par dessus l'embout 2 et l'électrode inférieure 3; des bagues minces, 4, en une matière électriquement isolante, peuvent être interposées entre l' électrode 3 et la paroi interne du tube 1, ces bagues étant par exemple fixées sur ladite électrode 3. La figure 4 montre clairement que le bord replié 1c du tube 1 vient alors s'appliquer sur le bord de la face supérieure de l'embout 2. Une électrode supérieure de soudage 5, est alors amenée, par exemple par un mouvement vertical descendant, au contact du bord replié 1c, de façon à l'appliquer, avec une faible pression, sur l'embout 2; de préférence comme illustré sur la figure 4, la face inférieure de l'électrode supérieure 5 a une forme externe adaptée au bord replié 1c. Le passage d'un courant électrique de caractéristiques déterminées entre les deux électrodes 3 et 5 suffit ensuite pour assurer un soudage efficace de l'embout 2 au bord replié 1c du tube 1. Après relevage de l'électrode supérieure 5, le tube à fond soudé est dégagé de l'électrode inférieurre 3.

La présente invention n'est pas limitée à la forme de réalisation précédemment décrite. Elle englobe toutes ses variantes, dont quelques - unes seulement vont être indiquées ci-après, à titre d'exemples non limitatifs.

La forme des électrodes de soudage ainsi que leurs mouvements de rapprochement et d'éloignement sont matières à option, de même que la forme de la face inférieure de l'électrode supérieure.

La forme du bord replié de la première extrémité ouverte du tube est aussi matière à option; elle dépend notamment du procédé utilisé à cet effet; par exemple, le bord replié vers l'intérieur du tube pourrait être appliqué contre sa paroi interne.

**Revendications**

1. Procédé de confection d'un tube à fond soudé, selon lequel on rabat vers l'intérieur l'une (7a) des extrémités ouvertes d'un tube (1) pour former un rebord (1c) déterminant une ouverture (1d) de diamètre intérieur (D3) plus petit, on place à l'intérieur dudit tube un embout (2) de diamètre externe (02) plus grand que le diamètre intérieur (D3) de l'ouverture (1d), mais inférieur au diamètre intérieur (D1) du tube, cet embout présentant en son milieu, du côté tourné vers l'ouverture (7d), une saillie (2a), on déplace ledit embout jusqu'à ce qu'il vienne buter contre le rebord (1c), on maintient ledit embout appliqué contre ledit rebord (7c) et on l'y soude pour constituer un fond de tube étanche, caractérisé en ce que ladite saillie (2a) de l'embout est cylindrique, avec un diamètre à peine inférieur à celui (D3) de l'ouverture (1d) et une hauteur choisie de manière que le fond (1e) du tube (1) présente, après soudage, une face externe presque plane.

2. Procédé selon la revendication 1, dans lequel le soudage est opéré par méthode électrique à l'aide d'une électrode inférieure (3) sur laquelle l'embout est posé et une électrode supérieure (5) qui vient en appui sur le bord du tube, caractérisé en ce que l'électrode supérieure (5) est amenée au contact du bord replié (1c) du tube par un mouvement axial.

3. Procédé selon la revendication 2, caractérisé en ce que l'électrode supérieure (5) a une forme adaptée à la forme externe du bord replié (1c) du tube.

**Patentansprüche**

1. Verfahren zum Herstellen eines Rohres mit verschweißtem Boden, wobei das eine (1a) der offenen Enden eines Rohres (1) nach innen zur Bildung eines Randwulstes (1c) umgelegt wird, der eine Öffnung (1d) mit einer kleineren lichten Weite (D3) begrenzt, wobei ins Innere des Rohres ein Einsatzstück (2) eingebracht wird, dessen Außendurchmesser (D2) größer als die lichte Weite (D3) der Öffnung (1d), aber kleiner als der Innendurchmesser (D1) des Rohres ist und das in seiner Mitte auf der der Öffnung (1d) zugewandten Seite einen Vorsprung (2a) aufweist, der bis zur Anlage an den Randwulst (1c) bewegt wird, wobei das Einsatzstück am Randwulst anliegend gehalten und damit unter Bildung eines dichten Rohrbodens verschweißt wird, dadurch gekennzeichnet, daß der Vorsprung (2a) des Einsatzstückes zylindrisch mit einem Durchmesser ist, der knapp unterhalb desjenigen (D3) der Öffnung (1d) liegt, und mit einer derart gewählten Höhe, daß der Boden (1e) des Rohres (1) nach der Verschweißung eine fast ebene Außenfläche aufweist.

2. Verfahren nach Anspruch 1, wohei die Verschweißung auf elektrischem Wege mittels einer unteren Elektrode (3) erfolgt, auf welche das Einsatzstück aufgesetzt wird, und mittels einer oberen Elektrode (5), die am Rand des Rohres zur Anlage kommt, dadurch gekennzeichnet, daß die obere Elektrode (5) durch Axialbewegung bis zum Montakt mit dem Randwulst (1c) des Rohres zugestellt wird.

3. Verfahren nach Anspruch 2, dadurch gekennzeichnet, daß die obere Elektrode (5) eine Form hat, die der Außenform des Randwulstes (1c) des Rohres angepaßt ist.

## Claims

1. A process for the production of a tube having a welded bottom the said process comprising the steps of folding over one (1a) of the open ends of a tube (1) towards its interior to form an edge flange (1c) bounding an opening (1d) having a smaller inner diameter (D3), introducing into the said tube an end piece (2) having an outer diameter (D2) larger than the inner diameter (D3) of the opening (1d) but smaller than the inner diameter (D1) of the tube, the said end piece having at its center, on the side facing the opening (1d) a projection (2a), moving the said end piece until it abuts against the flange (1c), maintaining said end piece applied against the said flange (1c) and welding it thereto to form a fluidtight tube bottom, characterized in that the said projection (2a) of the end piece is cylindrical, with a diameter scarcely smaller than that (D3) of the opening (1d) and a height so selected that the end face (1e) of the tube (1) will have, after welding, an almost smooth outer face.

2. A process as claimed in claim 1, wherein the welding is carried out by an electrical method using a bottom electrode (3) on which the end piece is placed, and a top electrode (5) which is brought into contact with the edge of the tube, characterized in that the top electrode (5) is brought into contact with the folded-over edge (1c) of the tube by an axial movement.

3. A process as claimed in claim 2, characterized in that the top electrode (5) has a shape adapted to the external shape of the folded-over edge (1c) of the tube.

FIG.:1    FIG.:2    FIG.:3

FIG.:4